# EUROPÄISCHE PATENTSCHRIFT

(11) **EP 2 822 734 B1**
(45) Veröffentlichungstag und Bekanntmachung des Hinweises auf die Patenterteilung: **15.07.2020**
(21) Anmeldenummer: 13702590.4
(22) Anmeldetag: 23.01.2013
(51) Int. Cl.: B25D 17/24, F16F 7/116

(54) **HANDWERKZEUGMASCHINENVORRICHTUNG**
HAND-MACHINE TOOL DEVICE
DISPOSITIF DE MACHINE-OUTIL PORTATIVE

(30) Priorität: 09.03.2012 DE 102012203758
(43) Veröffentlichungstag der Anmeldung: 14.01.2015
(73) Patentinhaber: Robert Bosch GmbH, 70442 Stuttgart (DE)
(72) Erfinder: WERNER, Immanuel, 72813 St. Johann (DE)
(86) Internationale Anmeldenummer: PCT/EP2013/051180
(87) Internationale Veröffentlichungsnummer: WO 2013/131677

(56) Entgegenhaltungen:
- EP-A2- 1 736 283
- EP-A2- 2 018 939
- EP-A2- 2 100 698
- US-A1- 2008 179 152

## Beschreibung

### Stand der Technik

Eine Handwerkzeugmaschinenvorrichtung nach dem Oberbegriff des Anspruchs 1 ist bereits aus der EP 2 018 939 A2 bekannt.

### Offenbarung der Erfindung

Die Erfindung geht aus von einer Handwerkzeugmaschinenvorrichtung gemäß Anspruch 1 mit zumindest einer Schlagwerkeinheit, die zumindest ein Führungsrohr umfasst, und mit zumindest einer Ausgleichseinheit, die zu einer Reduzierung von Vibrationen in zumindest einem Betriebszustand der Schlagwerkeinheit vorgesehen ist, die zumindest teilweise radial außerhalb des Führungsrohrs angeordnet ist und die zumindest ein Ausgleichsmassenelement und eine Federeinheit aufweist.

Erfindungsgemäß weist die Federeinheit zumindest zwei Federelemente auf, die dazu vorgesehen sind, in zumindest einem Betriebszustand der Ausgleichseinheit zumindest im Wesentlichen gleichgerichtet auf das Ausgleichsmassenelement zu wirken. Unter einer "Ausgleichseinheit" soll in diesem Zusammenhang insbesondere eine Einheit verstanden werden, die dazu vorgesehen ist, Vibrationen und/oder eine Übertragung der Vibrationen, insbesondere auf einen Bediener, insbesondere in einem Leerlaufzustand und/oder in einem Lastzustand der Schlagwerkeinheit der Handwerkzeugmaschinenvorrichtung, insbesondere um zumindest 10 %, vorzugsweise um zumindest 20 % und besonders bevorzugt um zumindest 30 % zu reduzieren. In einem besonders bevorzugten Ausführungsbeispiel kann durch die Ausgleichseinheit eine Reduktion um zumindest 50 % erreicht werden. Unter "vorgesehen" soll insbesondere speziell ausgestaltet, ausgelegt und/oder ausgestattet verstanden werden. Unter "Vibrationen" sollen insbesondere unerwünschte Bewegungen der Handwerkzeugmaschinenvorrichtung, insbesondere einer Handwerkzeugmaschine, die die Handwerkzeugmaschinenvorrichtung umfasst, verstanden werden, welche insbesondere durch Trägheitsmomente bedingt sind, welche von Bewegungen und/oder Beschleunigungen von Bauteilen, insbesondere der Schlagwerkeinheit, hervorgerufen werden.

Unter "radial außerhalb" soll in diesem Zusammenhang insbesondere verstanden werden, dass zumindest einzelne Bauteile der Ausgleichseinheit, von einer Mittelachse entlang eines Radius nach außen betrachtet, nach dem Führungsrohr angeordnet sind. In einem besonders bevorzugten Ausführungsbeispiel ist die Ausgleichseinheit zumindest im Wesentlichen vollständig radial außerhalb des Führungsrohrs angeordnet. Unter "zumindest im Wesentlichen vollständig" soll in diesem Zusammenhang insbesondere zu zumindest 80 %, vorzugsweise zu zumindest 90 % und besonders bevorzugt zu zumindest 95 % eines Volumens und/oder einer Masse der Ausgleichseinheit verstanden werden. Das Ausgleichsmassenelement ist vorzugsweise dazu vorgesehen, eine zu einer Erregerschwingung der Schlagwerkeinheit gegenphasige Schwingungsbewegung, insbesondere in Axialrichtung, durchzuführen und so der Erregerschwingung vorzugsweise entgegenzuwirken und diese insbesondere abzuschwächen.

Unter einem "Federelement" soll in diesem Zusammenhang insbesondere ein Element verstanden werden, das zumindest teilweise zu einer elastischen Verformung, insbesondere zu einer elastischen Stauchung und/oder Dehnung insbesondere um zumindest 5 %, vorzugsweise um zumindest 15 % und besonders bevorzugt um zumindest 30 % einer axialen Länge des Federelements in einem entspannten Zustand, vorgesehen ist. Das Federelement kann zumindest teilweise aus zumindest einem elastisch verformbaren Kunststoff, wie insbesondere einem Elastomer, gebildet sein. In einem besonders bevorzugten Ausführungsbeispiel ist das Federelement zumindest teilweise von einem Spiralfederelement gebildet. Es sind jedoch auch andere, einem Fachmann als sinnvoll erscheinende Ausgestaltungen der zumindest zwei Federelemente denkbar.

Unter "gleichgerichtet" soll in diesem Zusammenhang insbesondere verstanden werden, dass zumindest eine Komponente einer Kraft, die die Federelemente auf das Ausgleichsmassenelement übertragen, insbesondere parallel zu der Axialrichtung, in eine zumindest im Wesentlichen gleiche Richtung wirken und vorzugsweise parallel zueinander verlaufen. Unter einer "Komponente einer Kraft" soll in diesem Zusammenhang insbesondere ein Kraftvektor verstanden werden, der sich insbesondere durch eine Kraftzerlegung ergibt und der sich parallel zu einer Koordinatenachse eines bei der Kraftzerlegung angewandten Koordinatensystems erstreckt. Vorzugsweise übertragen die gleichgerichteten Federelemente, insbesondere in Axialrichtung, in dem zumindest einen Betriebszustand der Ausgleichseinheit zumindest im Wesentlichen einheitlich eine Zugkraft oder eine Druckkraft auf das Ausgleichsmassenelement.

Durch die erfindungsgemäße Ausgestaltung kann eine Länge der zumindest zwei Federelemente, die für eine Erreichung einer für die Dämpfung der Vibrationen notwendigen Federkonstanten und/oder Federarbeit, vorteilhaft reduziert werden. Dadurch kann auf konstruktiv einfache Weise eine vorteilhafte Baulängeneinsparung der Ausgleichseinheit und damit insbesondere eine vorteilhaft kompakte und kurzbauende Ausgestaltung der Handwerkzeugmaschinenvorrichtung erreicht werden. Durch die erfindungsgemäße Anordnung von zumindest zwei Federelementen, die in dem zumindest einen Betriebszustand der Ausgleichseinheit gleichgerichtet auf das Ausgleichsmassenelement wirken, können Windungssteigung und/oder Windungszahl, durch die die für die Dämpfung der Vibrationen notwendige Federkonstante und/oder Federarbeit erreicht wird, auf die zumindest zwei Federelemente aufgeteilt werden, wodurch eine Länge der einzelnen Federelemente in Axialrichtung vorteilhaft reduziert werden kann.

Des Weiteren wird vorgeschlagen, dass die Federeinheit zumindest drei Federelemente aufweist, die dazu vorgesehen sind in zumindest einem Betriebszustand gleichgerichtet auf das Ausgleichsmassenelement zu wirken. Es ist auch denkbar, dass die Federeinheit vier oder mehr Federelemente aufweist, die dazu vorgesehen sind, in zumindest einem Betriebszustand gleichgerichtet auf das Ausgleichsmassenelement zu wirken. Dadurch kann die Länge der einzelnen Federelemente in Axialrichtung und somit die axiale Baulänge der Ausgleichseinheit und insbesondere der Handwerkzeugmaschinenvorrichtung vorteilhaft weiter reduziert werden.

Ferner wird vorgeschlagen, dass die Federeinheit zumindest zwei weitere Federelemente aufweist, die dazu vorgesehen sind, in zumindest einem Betriebszustand zueinander gleichgerichtet und den Federelementen entgegengerichtet auf das Ausgleichsmassenelement zu wirken. Dadurch kann eine bevorzugte, weitere Reduzierung der axialen Baulänge der Ausgleichseinheit und insbesondere der Handwerkzeugmaschinenvorrichtung auf vorteilhaft einfache und kostengünstige Weise erreicht werden.

Des Weiteren wird vorgeschlagen, dass die Federelemente und die weiteren Federelemente der Federeinheit in Axialrichtung an sich gegenüber liegenden Enden des Ausgleichsmassenelements angeordnet sind. Unter "sich gegenüber liegenden Enden" sollen in diesem Zusammenhang insbesondere zwei Bereiche des Ausgleichsmassenelements verstanden werden, die, zumindest im Wesentlichen parallel zur Axialrichtung betrachtet, zumindest im Wesentlichen einen maximal möglichen Abstand zueinander aufweisen. Dadurch können eine bevorzugt gute Reduzierung der Vibrationen in einem Betriebszustand und zugleich eine kleinbauende Ausgestaltung der Handwerkzeugmaschinenvorrichtung erreicht werden.

Erfindungsgemäß sind die Federelemente im Wesentlichen gleichmäßig über einen Umfang des Ausgleichsmassenelements verteilt angeordnet. Zudem wird vorgeschlagen, dass die weiteren Federelemente zumindest im Wesentlichen gleichmäßig über einen Umfang des Ausgleichsmassenelements verteilt angeordnet sind. Unter "gleichmäßig verteilt" soll in diesem Zusammenhang insbesondere verstanden werden, dass die Federelemente zueinander jeweils einen gleichen Abstand aufweisen. Unter "zumindest im Wesentlichen" soll dabei insbesondere verstanden werden, dass die Abstände zwischen den Federelementen insbesondere weniger als 20 %, vorzugsweise weniger als 10 % und besonders bevorzugt weniger als 5 % voneinander abweichen. Dadurch kann eine vorteilhaft gleichmäßige und symmetrische Kraftübertragung sowie Abstützung des Ausgleichsmassenelements durch die Federelemente erreicht werden.

Zudem wird vorgeschlagen, dass die Ausgleichseinheit zumindest ein Gehäuseelement umfasst, das dazu vorgesehen ist, zumindest das zumindest eine Ausgleichsmassenelement und/oder die Federeinheit zumindest teilweise aufzunehmen. Das zumindest eine Gehäuseelement ist insbesondere dazu vorgesehen, zumindest 10 %, vorzugsweise zumindest 25 % und besonders bevorzugt zumindest 50 % einer Gesamterstreckung des zumindest eine Ausgleichsmassenelements und/oder der Federeinheit, insbesondere in Axialrichtung, aufzunehmen. Vorzugsweise umschließt das Gehäuseelement zumindest das zumindest eine Ausgleichsmassenelement und/oder die Federeinheit zumindest teilweise in zumindest einer Umfangsrichtung. Besonders bevorzugt ist das zumindest eine Gehäuseelement in Radialrichtung zumindest teilweise vor und/oder hinter dem zumindest einen Ausgleichsmassenelement und/oder der Federeinheit angeordnet. In einem besonders bevorzugten Ausführungsbeispiel umschließt das zumindest eine Gehäuseelement das zumindest eine Ausgleichsmassenelement und/oder die Federeinheit in Axialrichtung an zumindest einem Ende, vorzugsweise an beiden, sich gegenüberliegenden Enden. Dadurch kann ein vorteilhafter Schutz der Ausgleichseinheit insbesondere gegen ein ungewünschtes, mechanisches Einwirkungen und besonders vorteilhaft gegen ein Eindringen von Staub, Materialabrieb, Feuchtigkeit, Wasser und anderen, einem Fachmann als sinnvoll erscheinenden Störeinflüssen erreicht werden.

Ferner wird vorgeschlagen, dass das zumindest eine Gehäuseelement zumindest teilweise radial außerhalb der Schlagwerkeinheit angeordnet ist. Dadurch kann ein Platzbedarf im Inneren der Schlagwerkeinheit vorteilhaft reduziert werden und/oder für eine Aufnahme von anderen Bauteilen und/oder Baugruppen, wie beispielsweise für eine Hülsensteuerung der Schlagwerkeinheit, genutzt werden.

Zudem wird vorgeschlagen, dass das zumindest eine Ausgleichsmassenelement zumindest ein Federaufnahmeelement umfasst, das zu einer Befestigung zumindest eines der Federelemente der Federeinheit in eine Radialrichtung und/oder in eine Umfangsrichtung des Ausgleichsmassenelements vorgesehen ist. Unter einem "Federaufnahmeelement" soll in diesem Zusammenhang insbesondere ein Element des Ausgleichsmassenelements verstanden werden, das zumindest im Wesentlichen dazu vorgesehen ist, zumindest eine Kraftkomponente, insbesondere zumindest im Wesentlichen in Axialrichtung, des zumindest einen Federelement zumindest in einem Betriebszustand der Ausgleichseinheit zumindest teilweise aufzunehmen und/oder abzustützen. Vorzugsweise ist eine Anzahl der Federaufnahmeelemente des zumindest einen Ausgleichsmassenelements auf eine Anzahl der Federelemente, an denen sich das Ausgleichsmassenelement abstützt, abgestimmt.

Ferner wird vorgeschlagen, dass das zumindest eine Federaufnahmeelement zumindest teilweise einstückig mit dem Ausgleichsmassenelement verbunden ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann eine konstruktiv einfache, kostengünstige und Bauteile sparende Ausgestaltung der Handwerkzeugmaschinenvorrichtung, insbesondere der Ausgleichseinheit, erreicht werden.

### Zeichnung

Weitere Vorteile ergeben sich aus der folgenden Zeichnungsbeschreibung. In der Zeichnung sind mehrere Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen im Rahmen der Ansprüche zusammenfassen.

Es zeigen:
- Fig. 1: eine Handwerkzeugmaschine mit einer erfindungsgemäßen Handwerkzeugmaschinenvorrichtung in einer schematischen Seitenansicht,
- Fig. 2: einen Ausschnitt der erfindungsgemäßen Handwerkzeugmaschinenvorrichtung in einer Schnittdarstellung
- Fig. 3a: ein Ausgleichsmassenelement einer Ausgleichseinheit der erfindungsgemäßen Handwerkzeugmaschinenvorrichtung in einer Draufsicht,
- Fig. 3b: das Ausgleichsmassenelement der Ausgleichseinheit der erfindungsgemäßen Handwerkzeugmaschinenvorrichtung in einer Schnittansicht,
- Fig. 4: einen Ausschnitt einer alternativen Handwerkzeugmaschinenvorrichtung in einer Schnittdarstellung,
- Fig. 5: einen Ausschnitt einer alternativen Handwerkzeugmaschinenvorrichtung in einer Schnittdarstellung,
- Fig. 6: einen Ausschnitt einer alternativen Handwerkzeugmaschinenvorrichtung in einer Schnittdarstellung,
- Fig. 7: einen Ausschnitt einer alternativen Handwerkzeugmaschinenvorrichtung in einer Schnittdarstellung,
- Fig. 8: einen Ausschnitt einer alternativen Handwerkzeugmaschinenvorrichtung in einer Schnittdarstellung,
- Fig. 9a: einen Ausschnitt einer Ausgleichseinheit einer alternativen Handwerkzeugmaschinenvorrichtung in einer Schnittdarstellung,
- Fig. 9b: einen weiterer Ausschnitt der Ausgleichseinheit der erfindungsgemäßen Handwerkzeugmaschinenvorrichtung in einer Schnittdarstellung,
- Fig. 10: einen Ausschnitt einer alternativen Handwerkzeugmaschinenvorrichtung in einer Schnittdarstellung,
- Fig. 11: einen Ausschnitt einer alternativen Handwerkzeugmaschinenvorrichtung in einer Schnittdarstellung,
- Fig. 12a ein: Gehäuseelement einer Ausgleichseinheit einer alternativen Handwerkzeugmaschinenvorrichtung in einer perspektivischen Darstellung,
- Fig. 12b: ein Ausgleichsmassenelement der Ausgleichseinheit der erfindungsgemäßen Handwerkzeugmaschinenvorrichtung in einer perspektivischen Darstellung,
- Fig. 12c: das Gehäuseelement und das Ausgleichsmassenelement der Ausgleichseinheit der erfindungsgemäßen Handwerkzeugmaschinenvorrichtung in einer perspektivischen Darstellung,
- Fig. 12d: das Gehäuseelement und das Ausgleichsmassenelement der Ausgleichseinheit der erfindungsgemäßen Handwerkzeugmaschinenvorrichtung in einem teilweise montierten Zustand in einer perspektivischen Darstellung,
- Fig.: 12e das Gehäuseelement und das Ausgleichsmassenelement der Ausgleichseinheit der erfindungsgemäßen Handwerkzeugmaschinenvorrichtung in einem teilweise montierten Zustand in einer Schnittdarstellung und
- Fig. 12f: die Ausgleichseinheit der erfindungsgemäßen Handwerkzeugmaschinenvorrichtung in einer Schnittdarstellung.

### Beschreibung der Ausführungsbeispiele

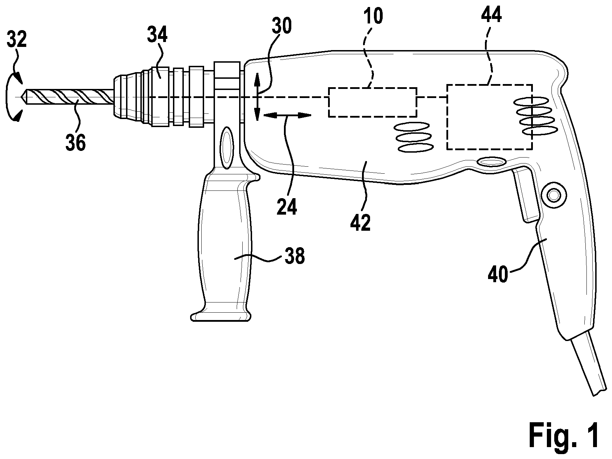

In Figur 1 ist eine von einem Bohrhammer gebildete Handwerkzeugmaschine dargestellt. Es ist auch denkbar, dass die Handwerkzeugmaschine von einer Schlagbohrmaschine gebildet ist. Die Handwerkzeugmaschine ist von einer Elektrohandwerkzeugmaschine gebildet. In einem Frontbereich der Handwerkzeugmaschine ist eine Werkzeugaufnahme 34 angeordnet, welche zu einer Aufnahme eines Einsatzwerkzeugs 36, insbesondere eines Bohr- oder Meißeleinsatzwerkzeugs, vorgesehen ist. Des Weiteren ist in dem Frontbereich der Handwerkzeugmaschine ein Zusatzhandgriff 38 und an einer dem Frontbereich abgewandten Seite der Handwerkzeugmaschine ein Haupthandgriff 40 angeordnet, über welche die Handwerkzeugmaschine von einem Bediener führbar ist. Der Haupthandgriff 40 ist von einem Teil eines Gehäuses 42 der Handwerkzeugmaschine gebildet. Das Gehäuse 42 der Handwerkzeugmaschine nimmt eine nicht näher dargestellte, von einem Elektromotor gebildete Antriebseinheit 44 auf. Die Antriebseinheit 44 ist dazu vorgesehen, eine Schlagwerkeinheit 10 einer Handwerkzeugmaschinenvorrichtung anzutreiben.

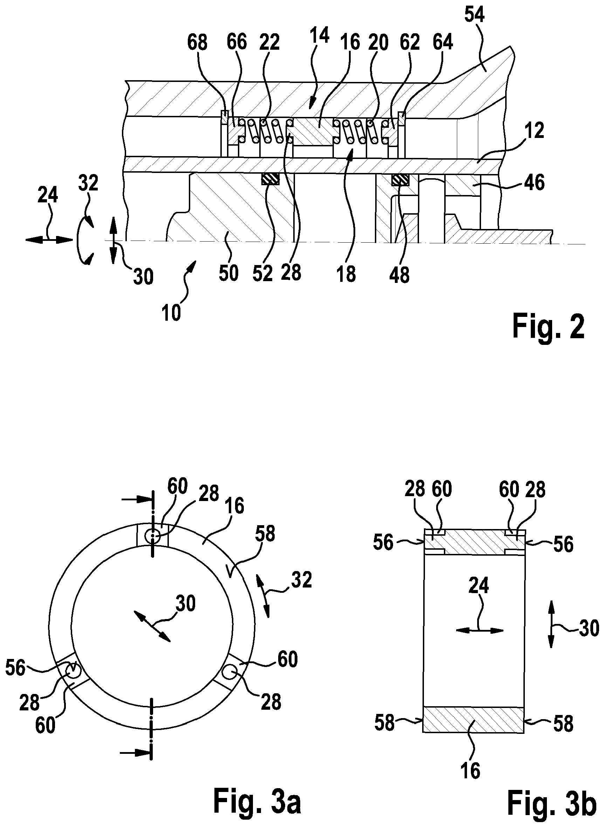

In Figur 2 ist ein Teil der Schlagwerkeinheit 10 dargestellt. Die Schlagwerkeinheit 10 umfasst ein von einem Hammerrohr gebildetes Führungsrohr 12. In dem Führungsrohr 12 ist ein von der Antriebseinheit 44 angetriebener Kolben 46 in Axialrichtung 24 geführt. Der Kolben 46 weist ein von einem Dichtungsring gebildetes Dichtungselement 48 auf. Von der Antriebseinheit 44 zu der Werkzeugaufnahme 34 hin betrachtet ist in Axialrichtung 24 hinter dem Kolben 46 ein Schläger 50 angeordnet. Der Schläger 50 ist ebenfalls in Axialrichtung 24 in dem Führungsrohr 12 beweglich gelagert. Der Schläger 50 weist ein von einem Dichtungsring gebildetes Dichtungselement 52 auf. In Axialrichtung 24 ist zwischen dem Kolben 46 und dem Schläger 50 ein Raum angeordnet. Die Dichtungselemente 48, 52 dichten den Raum luftdicht ab, sodass bei einer Bewegung in Axialrichtung 24 des Kolbens 46 und des Schlägers 50 relativ zueinander ein in dem Raum eingeschlossenes Luftvolumen dekomprimiert bzw. komprimiert wird. Dadurch wird in einem Betriebszustand ein Impuls des Kolbens 46 zumindest teilweise auf den Schläger 50 übertragen. Der Schläger 50 gibt den Impuls in einem Betriebszustand wiederum zumindest teilweise an das in der Werkzeugaufnahme 34 gehaltene Einsatzwerkzeug 36 ab.

In Radialrichtung 30 ist nach dem Führungsrohr 12 der Schlagwerkeinheit 10 ein weiteres Führungsrohr 54 angeordnet. Das weitere Führungsrohr 54 ist in Radialrichtung 30 beabstandet zu dem Führungsrohr 12 der Schlagwerkeinheit 10 angeordnet. Zwischen dem Führungsrohr 12 der Schlagwerkeinheit 10 und dem weiteren Führungsrohr 54 ist in Radialrichtung 30 eine Ausgleichseinheit 14 angeordnet, die zu einer Reduzierung von Vibrationen, die in einem Betriebszustand der Schlagwerkeinheit 10, sowohl in einem Leerlaufzustand als auch in einem Lastzustand, entstehen, vorgesehen ist. Die Ausgleichseinheit 14 ist in Radialrichtung 30 außerhalb des Führungsrohrs 12 der Schlagwerkeinheit 10 angeordnet und umfasst ein Ausgleichsmassenelement 16 und eine Federeinheit 18.

Die Federeinheit 18 umfasst insgesamt sechs Federelemente 20, 22. Dabei sind jeweils drei Federelemente 20, 22 an jeweils einem Ende des Ausgleichsmassenelements 16 in Axialrichtung 24 angeordnet. Es ist jedoch auch denkbar, eine höhere oder geringere Anzahl von Federelementen 20, 22 vorzusehen. Die Federelemente 20, die an einem Ende des Ausgleichsmassenelements 16 angeordnet sind, sind dazu vorgesehen, in einem Betriebszustand der Ausgleichseinheit 14 zueinander gleichgerichtet auf das Ausgleichsmassenelement 16 zu wirken. Die weiteren Federelemente 22, die an einem in Axialrichtung 24 gegenüber liegenden Ende des Ausgleichsmassenelements 16 angeordnet sind, sind dazu vorgesehen, in einem Betriebszustand der Ausgleichseinheit 14 zueinander gleichgerichtet auf das Ausgleichsmassenelement 16 zu wirken. Die weiteren Federelemente 22 sind ferner dazu vorgesehen, den Federelementen 20 entgegengerichtet auf das Ausgleichsmassenelement 16 zu wirken. Die Ausgleichseinheit 14 ist bezüglich einer Federsteifigkeit der Federelemente 20, 22 und einer Masse des Ausgleichsmassenelements 16 an eine Erregerschwingung der Schlagwerkeinheit 10 angepasst.

Das Ausgleichsmassenelement 16 ist in Axialrichtung 24 relativ zu dem Führungsrohr 12 der Schlagwerkeinheit 10 und dem weiteren Führungsrohr 54 verschiebbar gelagert. Das Ausgleichsmassenelement 16 ist gegen die Federelemente 20, 22 der Federeinheit 18 in Axialrichtung 24 verschiebbar gelagert. Das Ausgleichsmassenelement 16 der Ausgleichseinheit 14 bildet einen Gegenschwinger, der in einem Betriebszustand gegenphasig zu der von der Schlagwerkeinheit 10 verursachten Erregerschwingung schwingt und so Beschleunigungen entgegenwirkt und diese reduziert. Das Ausgleichsmassenelement 16 ist in einem montierten Zustand in Radialrichtung 30 gegen das weitere Führungsrohr 54 abgestützt und in Axialrichtung 24 an diesem geführt.

Das Ausgleichsmassenelement 16 ist hohlzylinderförmig ausgebildet (Figur 3a). In Axialrichtung 24 betrachtet sind an den Endbereichen des hohlzylinderförmigen Ausgleichsmassenelements 16 jeweils drei Federaufnahmeelemente 28 angeordnet. Eine Anzahl der Federaufnahmeelemente 28, die jeweils an den Endbereichen des Ausgleichsmassenelements 16 angeordnet sind, entspricht der Anzahl der Federelemente 20, 22 der Federeinheit 18, die gleichgerichtet auf das Ausgleichsmassenelement 16 wirken. Die Federaufnahmeelemente 28 sind zu einer Befestigung der Federelemente 20, 22 der Federeinheit 18 in Radialrichtung 30 und in einer Umfangsrichtung 32 des Ausgleichsmassenelements 16 vorgesehen. Die Federaufnahmeelemente 28 sind mit dem Ausgleichsmassenelement 16 verbunden. Die Federaufnahmeelemente 28 sind einstückig mit dem Ausgleichsmassenelement 16 verbunden.

Die Federaufnahmeelemente 28 sind stiftförmig ausgebildet und erstrecken sich parallel zur Axialrichtung 24 (Figur 3b). Die Federaufnahmeelemente 28 sind jeweils in dem Endbereich des Ausgleichsmassenelements 16 angeordnet. Eine Stirnfläche 56 der Federaufnahmeelemente 28 ist jeweils bündig mit einer Stirnfläche 58 des Ausgleichsmassenelements 16 ausgebildet. In einem an die Federaufnahmeelemente 28 angrenzenden Bereich 60 ist jeweils eine Materialaussparung des Ausgleichsmassenelements 16 vorgesehen. Ein Durchmesser der Federaufnahmeelemente 28 entspricht jeweils einem Innendurchmesser der Federelemente 20, 22. Es ist auch denkbar, dass der Durchmesser der Federaufnahmeelemente 28 kleiner ist als der Innendurchmesser der Federelemente 20, 22.

Die Federaufnahmeelemente 28 sind gleichmäßig über einen Umfang des Ausgleichsmassenelements 16 verteilt angeordnet. In einem montierten Zustand der Ausgleichseinheit 14 sind somit auch die Federelemente 20, 22 der Federeinheit 18 gleichmäßig über einen Umfang des Ausgleichsmassenelements 16 verteilt angeordnet.

Jeweils ein Ende der Federelemente 20, das dem an dem Federaufnahmeelement 28 befestigten Ende der Federelemente 20 gegenüber angeordnet ist, ist an einem Federanschlagselement 62 abgestützt. Das Federanschlagselement 62 ist in Radialrichtung 30 innerhalb des weiteren Führungsrohrs 54 angeordnet und liegt an diesem entlang eines Innenumfangs des weiteren Führungsrohrs 54 an. In Axialrichtung 24 ist das Federanschlagselement 62 von einem Sicherungselement 64 gehalten. Das Sicherungselement 64 ist in Axialrichtung 24 auf einer den Federelementen 20 abgewandten Seite des Federanschlagselements 62 angeordnet. Das Sicherungselement 64 ist von einem Sprengring gebildet. Das Sicherungselement 64 ist in einer Nut in dem weiteren Führungsrohr 54 angeordnet und ragt in Radialrichtung 30 über die Nut hinaus.

Jeweils ein Ende der weiteren Federelemente 22, das dem an Federaufnahmeelement 28 befestigten Ende der weiteren Federelemente 22 gegenüber angeordnet ist, ist an einem Federanschlagselement 66 abgestützt. Das Federanschlagselement 66 ist in Radialrichtung 30 innerhalb des weiteren Führungsrohrs 54 angeordnet und liegt an diesem entlang eines Innenumfangs des weiteren Führungsrohrs 54 an. Das Federanschlagselement 66 ist in Axialrichtung 24 auf einer dem Federanschlagselement 62 abgewandten Seite der Ausgleichseinheit 14 angeordnet. In Axialrichtung 24 ist das Federanschlagselement 66 von einem Sicherungselement 68 gehalten. Das Sicherungselement 68 ist in Axialrichtung 24 auf einer den weiteren Federelementen 22 abgewandten Seite des Federanschlagselements 66 angeordnet. Das Sicherungselement 68 ist von einem Sprengring gebildet. Das Sicherungselement 68 ist in einer Nut in dem weiteren Führungsrohr 54 angeordnet und ragt in Radialrichtung 30 über die Nut hinaus.

Es ist jedoch auch denkbar, dass die Federanschlagselemente 62, 66 einstückig mit dem weiteren Führungsrohr 54 ausgebildet sind. Dadurch könnte auf die Sicherungselemente 64, 68 verzichtet werden.

Die nachfolgenden Beschreibungen und die Zeichnungen der weiteren Ausführungsbeispiele beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des ersten Ausführungsbeispiels verwiesen werden kann. Zur Unterscheidung der Ausführungsbeispiele sind den Bezugszeichen der weiteren Ausführungsbeispiele die Ziffern 1 bis 9 vorangestellt.

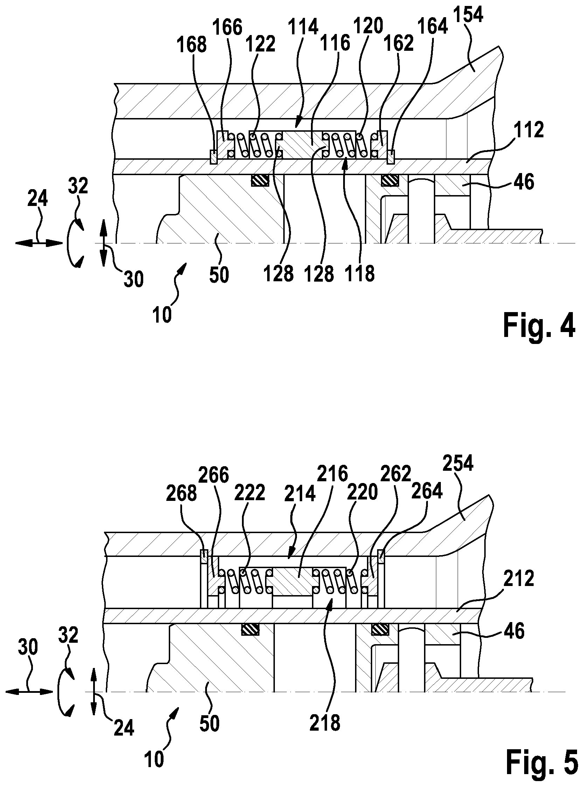

In Figur 4 ist eine alternative Ausgestaltung der Handwerkzeugmaschinenvorrichtung mit der bereits beschriebenen Schlagwerkeinheit 10 und mit einer Ausgleichseinheit 114 dargestellt. Die Ausgleichseinheit 114 entspricht zumindest im Wesentlichen der bereits beschriebenen Ausgleichseinheit 14. Die Ausgleichseinheit 114 umfasst ein Ausgleichsmassenelement 116, das dem bereits beschriebenen Ausgleichsmassenelement 16 entspricht, und eine Federeinheit 118, das der bereits beschriebenen Federeinheit 18 entspricht. Das Ausgleichsmassenelement 116 ist in Axialrichtung 24 relativ zu einem Führungsrohr 112 der Schlagwerkeinheit 10 und dem weiteren Führungsrohr 154 verschiebbar gelagert. Das Ausgleichsmassenelement 116 ist gegen Federelemente 120, 122 der Federeinheit 118 in Axialrichtung 24 verschiebbar gelagert. Das Ausgleichsmassenelement 116 ist in einem montierten Zustand in Radialrichtung 30 gegen das Führungsrohr 112 abgestützt und in Axialrichtung 24 an diesem geführt.

Jeweils ein Ende der Federelemente 120, das einem an Federaufnahmeelementen 128 befestigten Ende der Federelemente 120 gegenüber angeordnet ist, ist an einem Federanschlagselement 162 abgestützt. Das Federanschlagselement 162 entspricht dem bereits beschriebenen Federanschlagselement 62. Das Federanschlagselement 162 ist in Radialrichtung 30 außerhalb des Führungsrohrs 112 angeordnet und liegt an diesem entlang eines Außenumfangs des Führungsrohrs 112 an. In Axialrichtung 24 ist das Federanschlagselement 162 von einem Sicherungselement 164 gehalten. Das Sicherungselement 164 ist in Axialrichtung 24 auf einer den Federelementen 120 abgewandten Seite des Federanschlagselements 162 angeordnet. Das Sicherungselement 164 ist von einem Sprengring gebildet. Das Sicherungselement 164 ist in einer Nut in dem Führungsrohr 112 angeordnet und ragt in Radialrichtung 30 über die Nut hinaus.

Jeweils ein Ende der weiteren Federelemente 122, das dem an Federaufnahmeelement 128 befestigten Ende der weiteren Federelemente 122 gegenüber angeordnet ist, ist an einem Federanschlagselement 166 abgestützt. Das Federanschlagselement 166 entspricht dem bereits beschriebenen Federanschlagselement 66. Das Federanschlagselement 166 ist in Radialrichtung 30 außerhalb des Führungsrohrs 112 angeordnet und liegt an diesem entlang eines Außenumfangs des Führungsrohrs 112 an. Das Federanschlagselement 166 ist in Axialrichtung 24 auf einer dem Federanschlagselement 166 abgewandten Seite der Ausgleichseinheit 114 angeordnet. In Axialrichtung 24 ist das Federanschlagselement 166 von einem Sicherungselement 168 gehalten. Das Sicherungselement 168 ist in Axialrichtung 24 auf einer den weiteren Federelementen 122 abgewandten Seite des Federanschlagselements 166 angeordnet. Das Sicherungselement 168 ist von einem Sprengring gebildet. Das Sicherungselement 168 ist in einer Nut in dem Führungsrohr 112 angeordnet und ragt in Radialrichtung 30 über die Nut hinaus.

Es ist jedoch auch denkbar, dass die Federanschlagselemente 162, 166 einstückig mit dem Führungsrohr 112 ausgebildet sind. Dadurch könnte auf die Sicherungselemente 164, 168 verzichtet werden.

In Figur 5 ist eine alternative Ausgestaltung der Handwerkzeugmaschinenvorrichtung mit der bereits beschriebenen Schlagwerkeinheit 10 und mit einer Ausgleichseinheit 214 dargestellt. Die Ausgleichseinheit 214 umfasst ein Ausgleichsmassenelement 216, das dem bereits beschriebenen Ausgleichsmassenelement 16 entspricht, und eine Federeinheit 218, das der bereits beschriebenen Federeinheit 18 entspricht. Das Ausgleichsmassenelement 216 ist in Axialrichtung 24 relativ zu einem Führungsrohr 212 der Schlagwerkeinheit 10 und einem weiteren Führungsrohr 254 verschiebbar gelagert. Das Ausgleichsmassenelement 216 ist gegen Federelemente 220, 222 der Federeinheit 218 in Axialrichtung 24 verschiebbar gelagert.

In einem montierten Zustand weist das Ausgleichsmassenelement 216 in einer Radialrichtung 30 einen Abstand zu dem Führungsrohr 212 und dem weiteren Führungsrohr 254 auf. Dadurch kann das Ausgleichsmassenelement 216 in einem Betriebszustand der Ausgleichseinheit 214 zudem eine Verkippbewegung um eine Bearbeitungsachse der Handwerkzeugmaschinenvorrichtung und eine Bewegung in Radialrichtung 30 ausführen.

Zu einer Abstützung der Federelemente 220, 222 in Axialrichtung 24 sind Federanschlagselemente 262, 266 vorgesehen, die den bereits beschriebenen Federanschlagselementen 62, 66 entsprechen. Die Federanschlagselemente 262, 266 sind in Radialrichtung 30 innerhalb des weiteren Führungsrohrs 254 angeordnet und liegen an diesem entlang eines Innenumfangs des weiteren Führungsrohrs 254 an. Es ist jedoch auch denkbar, dass die Federanschlagselemente 262, 266 in Radialrichtung 30 außerhalb des Führungsrohrs 212 angeordnet sind und an diesem entlang eines Außenumfangs des Führungsrohrs 212 anliegen. Die Federanschlagselemente 262, 266 weisen eine größere Erstreckung in Radialrichtung 30 auf, als die bereits beschriebenen Federanschlagselemente 62, 66. In Axialrichtung 24 sind die Federanschlagselemente 262, 266 jeweils von einem Sicherungselement 264, 268 gehalten, die den bereits beschrieben Sicherungselementen 64, 68 entsprechen.

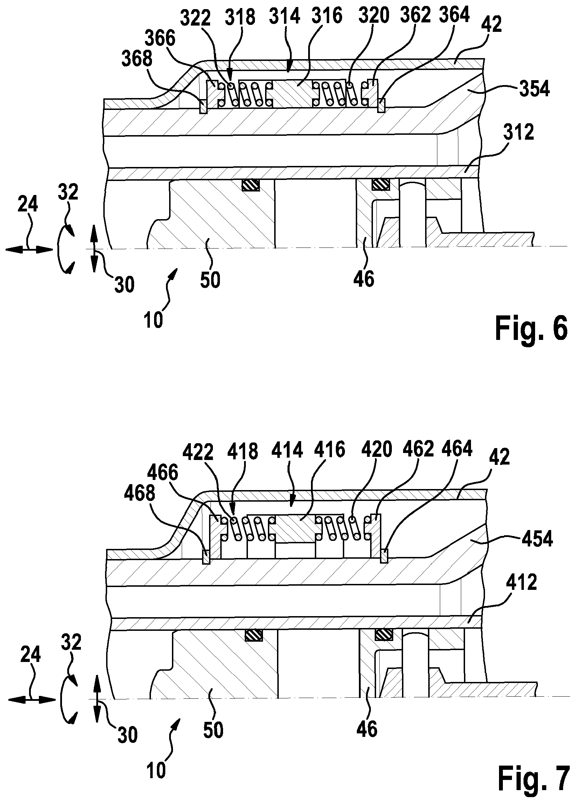

In Figur 6 ist eine alternative Ausgestaltung der Handwerkzeugmaschinenvorrichtung mit der bereits beschriebenen Schlagwerkeinheit 10 und mit einer Ausgleichseinheit 314 dargestellt. Die Ausgleichseinheit 314 umfasst ein Ausgleichsmassenelement 316, das dem bereits beschriebenen Ausgleichsmassenelement 16 entspricht, und eine Federeinheit 318, das der bereits beschriebenen Federeinheit 18 entspricht. Das Ausgleichsmassenelement 316 ist in Axialrichtung 24 relativ zu einem Führungsrohr 312 der Schlagwerkeinheit 10 und einem weiteren Führungsrohr 354 verschiebbar gelagert. Das Ausgleichsmassenelement 316 ist gegen Federelemente 320, 322 der Federeinheit 318 in Axialrichtung 24 verschiebbar gelagert.

Die Ausgleichseinheit 314 ist in einem montierten Zustand in einer Radialrichtung 30 außerhalb des weiteren Führungsrohrs 354 angeordnet. Das Ausgleichsmassenelement 316 ist in einem montierten Zustand in Radialrichtung 30 gegen das weitere Führungsrohr 354 abgestützt und in Axialrichtung 24 an diesem geführt. In Umfangsrichtung 32 ist die Ausgleichseinheit 314 von einem Teil des Gehäuses 42 der Handwerkzeugmaschine umschlossen.

Zu einer Abstützung der Federelemente 320, 322 in Axialrichtung 24 sind Federanschlagselemente 362, 366 vorgesehen, die den bereits beschriebenen Federanschlagselementen 62, 66 entsprechen. Die Federanschlagselemente 362, 366 sind in einer Radialrichtung 30 außerhalb des weiteren Führungsrohrs 354 angeordnet und liegen an diesem entlang eines Außenumfangs des weiteren Führungsrohrs 354 an. In Axialrichtung 24 sind die Federanschlagselemente 362, 366 jeweils von einem Sicherungselement 364, 368 gehalten, die den bereits beschrieben Sicherungselementen 64, 68 entsprechen.

Das Führungsrohr 312 und das weitere Führungsrohr 354 sind in Radialrichtung 30 voneinander beabstandet angeordnet. In dem dadurch entstandenen Raum können somit einem Fachmann als sinnvoll erscheinende Funktionsbaugruppen, wie beispielsweise eine Hülsensteuerungseinheit für die Schlagwerkeinheit 10, vorgesehen und angeordnet werden.

In Figur 7 ist eine alternative Ausgestaltung der Handwerkzeugmaschinenvorrichtung mit der bereits beschriebenen Schlagwerkeinheit 10 und mit einer Ausgleichseinheit 414 dargestellt. Die Ausgleichseinheit 414 umfasst ein Ausgleichsmassenelement 416, das dem bereits beschriebenen Ausgleichsmassenelement 16 entspricht, und eine Federeinheit 418, das der bereits beschriebenen Federeinheit 18 entspricht. Das Ausgleichsmassenelement 416 ist in Axialrichtung 24 relativ zu einem Führungsrohr 412 der Schlagwerkeinheit 10 und einem weiteren Führungsrohr 454 verschiebbar gelagert. Das Ausgleichsmassenelement 416 ist gegen Federelemente 420, 422 der Federeinheit 418 in Axialrichtung 24 verschiebbar gelagert.

Die Ausgleichseinheit 414 ist in einem montierten Zustand in einer Radialrichtung 30 außerhalb des weiteren Führungsrohrs 454 angeordnet. In einem montierten Zustand weist das Ausgleichsmassenelement 416 in einer Radialrichtung 30 einen Abstand zu dem weiteren Führungsrohr 454 und einem Gehäuse 42 einer Handwerkzeugmaschine, die die Handwerkzeugmaschinenvorrichtung umfasst, auf. Dadurch kann das Ausgleichsmassenelement 416 in einem Betriebszustand der Ausgleichseinheit 414 zudem eine Verkippbewegung um eine Bearbeitungsachse der Handwerkzeugmaschinenvorrichtung und eine Bewegung in Radialrichtung 30 ausführen. In Umfangsrichtung 32 ist die Ausgleichseinheit 414 von einem Teil des Gehäuses 42 der Handwerkzeugmaschine umschlossen.

Zu einer Abstützung der Federelemente 420, 422 in Axialrichtung 24 sind Federanschlagselemente 462, 466 vorgesehen, die den bereits beschriebenen Federanschlagselementen 62, 66 entsprechen. Die Federanschlagselemente 462, 466 sind in einer Radialrichtung 30 außerhalb des weiteren Führungsrohrs 454 angeordnet und liegen an diesem entlang eines Außenumfangs des weiteren Führungsrohrs 454 an. Die Federanschlagselemente 462, 466 weisen eine größere Erstreckung in Radialrichtung 30 auf, als die bereits beschriebenen Federanschlagselemente 62, 66. In Axialrichtung 24 sind die Federanschlagselemente 462, 466 jeweils von einem Sicherungselement 464, 468 gehalten, die den bereits beschrieben Sicherungselementen 64, 68 entsprechen.

Das Führungsrohr 412 und das weitere Führungsrohr 454 sind in Radialrichtung 30 voneinander beabstandet angeordnet. In dem dadurch entstandenen Raum können somit einem Fachmann als sinnvoll erscheinende Funktionsbaugruppen, wie beispielsweise eine Hülsensteuerungseinheit für die Schlagwerkeinheit 10, vorgesehen und angeordnet werden.

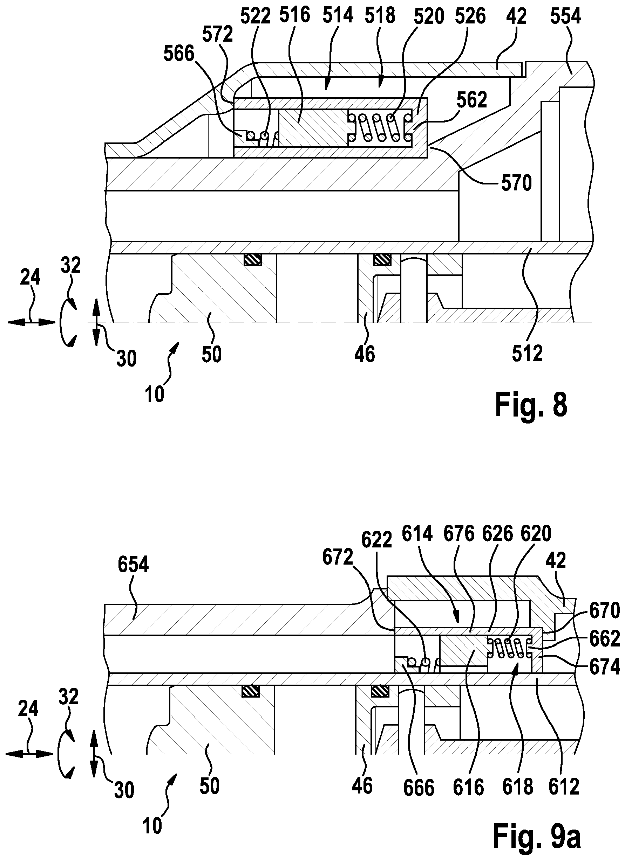

In Figur 8 ist eine alternative Ausgestaltung der Handwerkzeugmaschinenvorrichtung mit der bereits beschriebenen Schlagwerkeinheit 10 und mit einer Ausgleichseinheit 514 dargestellt. Die Ausgleichseinheit 514 umfasst ein Ausgleichsmassenelement 516, das dem bereits beschriebenen Ausgleichsmassenelement 16 entspricht, eine Federeinheit 518, die der bereits beschriebenen Federeinheit 18 entspricht, und ein Gehäuseelement 526. Das Gehäuseelement 526 ist dazu vorgesehen, das Ausgleichsmassenelement 516 und die Federeinheit 518 zumindest teilweise aufzunehmen. Das Gehäuseelement 526 ist ringförmig ausgebildet und weist einen U-förmigen Querschnitt auf.

Das Ausgleichsmassenelement 516 und die Federeinheit 518 sind vollständig innerhalb des Gehäuseelements 526 angeordnet. Das Gehäuseelement 526 ist einteilig ausgebildet. Das Gehäuseelement 526 ist, in Axialrichtung 24 betrachtet, an einem Ende offen ausgebildet. Das Ausgleichsmassenelement 516 ist in Axialrichtung 24 relativ zu einem Führungsrohr 512 der Schlagwerkeinheit 10 und einem weiteren Führungsrohr 554 verschiebbar gelagert. Das Ausgleichsmassenelement 516 ist gegen Federelemente 520 und gegen ein weiteres Federelement 522 der Federeinheit 518 in Axialrichtung 24 verschiebbar gelagert. Das Ausgleichsmassenelement 516 stützt sich in einem montierten Zustand in Radialrichtung 30 an zwei, in Umfangsrichtung 32 verlaufenden Innenseiten des Gehäuseelements 526 ab und ist in einem Betriebszustand in Axialrichtung 24 entlang diesen geführt. Das Federelement 522 erstreckt sich in Umfangsrichtung 32 um eine Bearbeitungsachse der Handwerkzeugmaschine. Die Federelemente 520 sind, wie bereits beschrieben, gleichmäßig über den Umfang des Ausgleichsmassenelements 516 verteilt angeordnet.

Die Ausgleichseinheit 514 ist in einem montierten Zustand in einer Radialrichtung 30 außerhalb des weiteren Führungsrohrs 554 und der Schlagwerkeinheit 10 angeordnet. In einem montierten Zustand ist die Ausgleichseinheit 514 in Radialrichtung 30 außerhalb des weiteren Führungsrohrs 554 angeordnet. Das Gehäuseelement 526 liegt in einem montierten Zustand in Umfangsrichtung 32 an einem Außenumfang des weiteren Führungsrohrs 554 an. In Axialrichtung 24 ist das Gehäuseelement 526 mittels eines Gehäuseanschlagselements 570 gesichert. Das Gehäuseanschlagselement 570 ist einstückig mit dem weiteren Führungsrohr 554 ausgebildet. Das Gehäuseanschlagselement 570 ist von einer Stufe gebildet, die sich entlang des Außenumfangs des weiteren Führungsrohrs 554 in Radialrichtung 30 nach außen erstreckt. In Umfangsrichtung 32 ist die Ausgleichseinheit 514 von einem Teil des Gehäuses 42 der Handwerkzeugmaschine umschlossen. Ferner ist ein weiteres Gehäuseanschlagselement 572 vorgesehen, das einstückig mit dem Gehäuse 42 der Handwerkzeugmaschine verbunden ist und das die Ausgleichseinheit 514 in Axialrichtung 24 sichert. Das weitere Gehäuseanschlagselement 572 ist von einer Stufe gebildet, die sich entlang des Innenumfangs des Gehäuses 42 in Radialrichtung 30 nach innen erstreckt.

Zu einer Abstützung der Federelemente 520, 522 in Axialrichtung 24 sind Federanschlagselemente 562, 566 vorgesehen. Die Federanschlagselemente 562 sind stiftförmig ausgebildet und einstückig mit dem Gehäuseelement 526 verbunden. Die Federanschlagselemente 562 erstrecken sich parallel zur Axialrichtung 24. Das weitere Federanschlagselement 566 an der Innenseite des Gehäuseelements 526 angeordnet, die den kleineren Durchmesser aufweist. In Axialrichtung 24 ist das Federanschlagselement 566 an dem offen ausgebildeten Ende des Gehäuseelements 526 angeordnet.

Die Ausgleichseinheit 514 kann als Baugruppe vormontiert werden und wird zu einer Montage der Ausgleichseinheit 514 mit der Handwerkzeugmaschinenvorrichtung lediglich auf das weitere Führungsrohr 554 aufgeschoben. Somit kann die als Baugruppe vormontierte Ausgleichseinheit 514 vorteilhaft als Nachrüstungsbausatz für Handwerkzeugmaschinen verkauft werden.

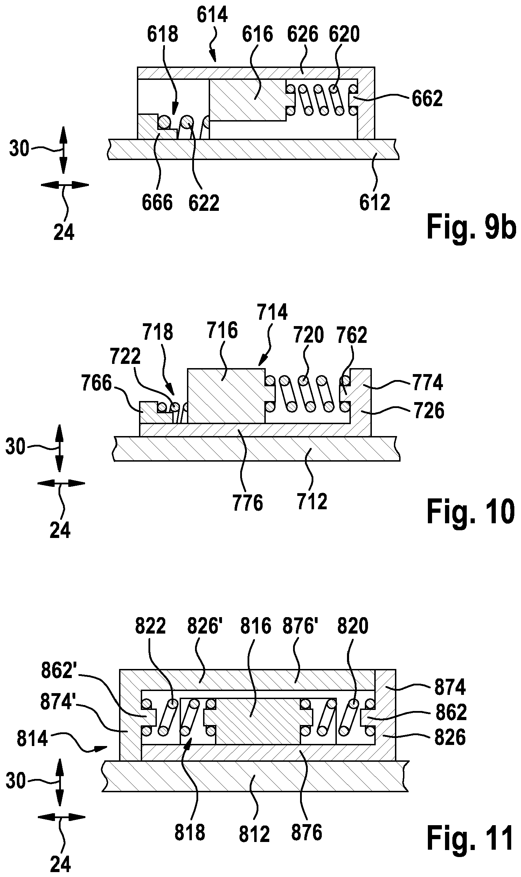

In den Figuren 9a und 9b ist eine alternative Ausgestaltung der Handwerkzeugmaschinenvorrichtung mit der bereits beschriebenen Schlagwerkeinheit 10 und mit einer Ausgleichseinheit 614 dargestellt. Die Ausgleichseinheit 614 entspricht zumindest im Wesentlichen der bereits beschriebenen Ausgleichseinheit 514. Die Ausgleichseinheit 614 umfasst ein Ausgleichsmassenelement 616, das dem bereits beschriebenen Ausgleichsmassenelement 16 entspricht, eine Federeinheit 618, die der bereits beschriebenen Federeinheit 18 entspricht, und ein Gehäuseelement 626. Das Gehäuseelement 626 ist dazu vorgesehen, das Ausgleichsmassenelement 616 und die Federeinheit 618 zumindest teilweise aufzunehmen. Das Gehäuseelement 626 ist ringförmig ausgebildet und weist einen L-förmigen Querschnitt auf.

Ein kurzer Schenkel 674 des Gehäuseelements 626 erstreckt sich in einem montierten Zustand senkrecht zur Axialrichtung 24 der Ausgleichseinheit 614 und liegt in Radialrichtung 30 an einem Führungsrohr 612 der Schlagwerkeinheit 10 an. Ein langer Schenkel 676 des Gehäuseelements 626 erstreckt sich in einem montierten Zustand parallel zur Axialrichtung 24 der Ausgleichseinheit 614 und liegt in Axialrichtung 24 an einem weiteren Führungsrohr 654 an. Der lange Schenkel 676 des Gehäuseelements 626 ist in Radialrichtung 30 beabstandet zu dem Führungsrohr 612 angeordnet. Das weitere Führungsrohr 654 weist Gehäuseanschlagselemente 670, 672 auf, die das Gehäuseelement 626 in einem montierten Zustand in Axialrichtung 24 sichern. Das Gehäuseelement kann in einem montierten Zustand einen Anschlag oder eine axiale Sicherung eines weiteren, nicht dargestellten Funktionsbauteils, wie beispielsweise einer Führungsrohrlagerung, einer Hülsensteuerung oder einer B-Schlagdämpfung, bilden.

In Figur 10 ist eine alternative Ausgestaltung der Handwerkzeugmaschinenvorrichtung mit der bereits beschriebenen Schlagwerkeinheit 10 und mit einer Ausgleichseinheit 714 dargestellt. Die Ausgleichseinheit 714 entspricht zumindest im Wesentlichen der bereits beschriebenen Ausgleichseinheit 614. Die Ausgleichseinheit 714 umfasst ein Gehäuseelement 726. Das Gehäuseelement 726 ist dazu vorgesehen, ein Ausgleichsmassenelement 716 und eine Federeinheit 718 zumindest teilweise aufzunehmen. Das Gehäuseelement 726 ist ringförmig ausgebildet und weist einen L-förmigen Querschnitt auf.

Ein kurzer Schenkel 774 des Gehäuseelements 726 erstreckt sich in einem montierten Zustand senkrecht zur Axialrichtung 24 der Ausgleichseinheit 714. Ein langer Schenkel 776 des Gehäuseelements 726 erstreckt sich in einem montierten Zustand parallel zur Axialrichtung 24 der Ausgleichseinheit 714 und liegt in Axialrichtung 24 an einem Führungsrohr 712 an. Der lange Schenkel 776 des Gehäuseelements 726 ist in Radialrichtung 30 beabstandet zu einem nicht dargestellten weiteren Führungsrohr angeordnet. Das Gehäuseelement 726 ist auf das Führungsrohr 712 aufgepresst, um das Gehäuseelement 626 in einem montierten Zustand in Axialrichtung 24 sichern. Es ist auch denkbar, dass Gehäuseanschlagselemente vorgesehen sind, die den Gehäuseanschlagselementen 670, 672 entsprechen.

In Figur 11 ist eine alternative Ausgestaltung der Handwerkzeugmaschinenvorrichtung mit der bereits beschriebenen Schlagwerkeinheit 10 und mit einer Ausgleichseinheit 814 dargestellt. Die Ausgleichseinheit 814 entspricht zumindest im Wesentlichen der bereits beschriebenen Ausgleichseinheit 614. Die Ausgleichseinheit 814 umfasst zwei Gehäuseelemente 826, 826'. Die Gehäuseelemente 826, 826' sind dazu vorgesehen, ein Ausgleichsmassenelement 816 und eine Federeinheit 818 zumindest teilweise aufzunehmen. Die Gehäuseelemente 826 sind ringförmig ausgebildet und weisen jeweils einen L-förmigen Querschnitt auf.

Ein kurzer Schenkel 874 des Gehäuseelements 826 erstreckt sich in einem montierten Zustand senkrecht zur Axialrichtung 24 der Ausgleichseinheit 814. Ein langer Schenkel 876 des Gehäuseelements 826 erstreckt sich in einem montierten Zustand parallel zur Axialrichtung 24 der Ausgleichseinheit 814 und liegt in Axialrichtung 24 an einem Führungsrohr 812 an. Der lange Schenkel 876 des Gehäuseelements 826 ist in Radialrichtung 30 beabstandet zu einem nicht dargestellten weiteren Führungsrohr angeordnet. Das Gehäuseelement 826 ist auf das Führungsrohr 812 aufgepresst, um das Gehäuseelement 826 in einem montierten Zustand in Axialrichtung 24 sichern. Es ist auch denkbar, dass Gehäuseanschlagselemente vorgesehen sind, die den Gehäuseanschlagselementen 670, 672 entsprechen.

Ein kurzer Schenkel 874' des Gehäuseelements 826' erstreckt sich in einem montierten Zustand senkrecht zur Axialrichtung 24 der Ausgleichseinheit 814 und liegt in Radialrichtung 30 an einem Führungsrohr 812 der Ausgleichseinheit 814 an. Ein langer Schenkel 876' des Gehäuseelements 826' erstreckt sich in einem montierten Zustand parallel zur Axialrichtung 24 der Ausgleichseinheit 814 und liegt in Axialrichtung 24 an dem nicht dargestellten weiteren Führungsrohr an. Der lange Schenkel 876' des Gehäuseelements 826' ist in Radialrichtung 30 beabstandet zu dem Führungsrohr 812 angeordnet.

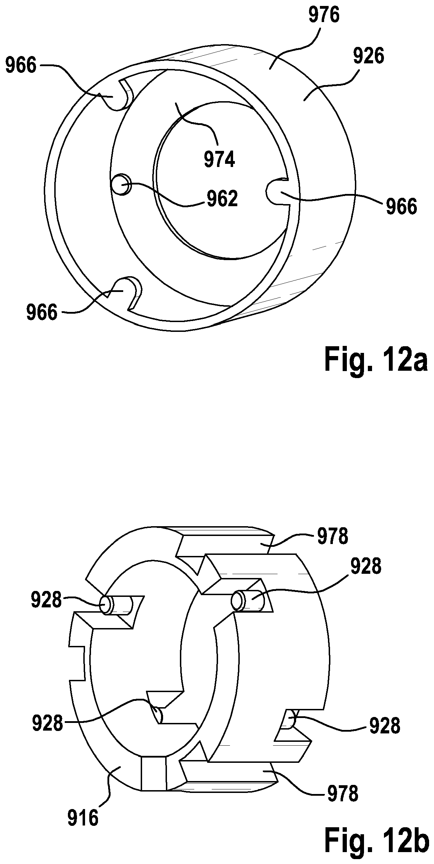

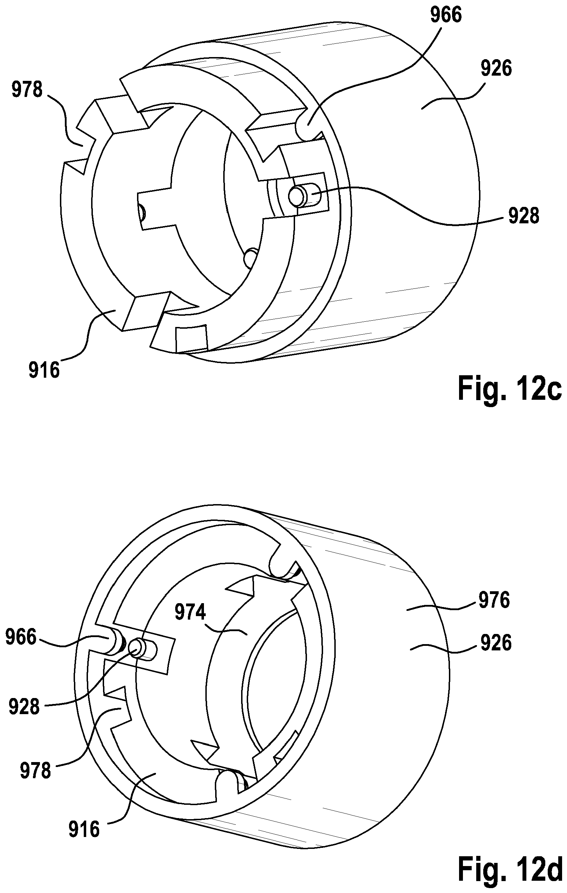

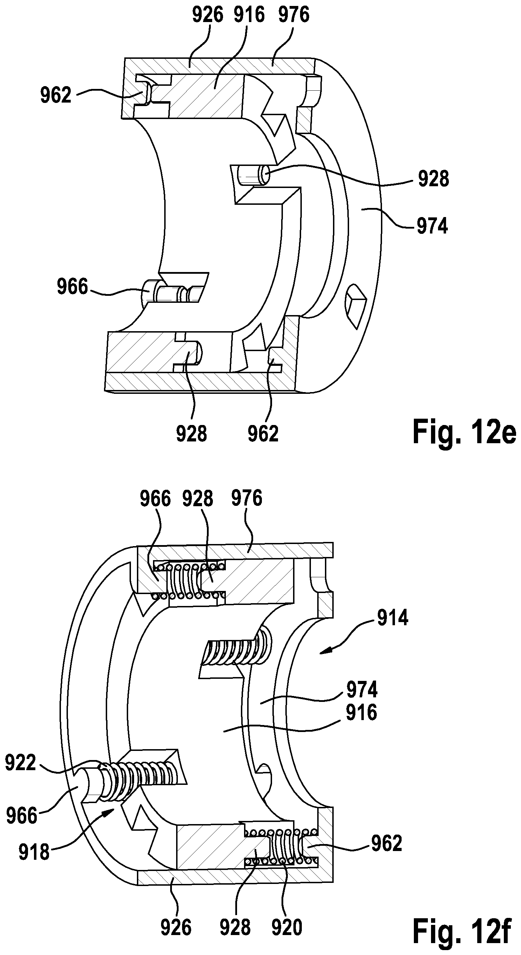

In den Figuren 12a bis 12f ist eine Ausgleichseinheit 914 einer alternativen Handwerkzeugmaschinenvorrichtung dargestellt. Die Ausgleichseinheit 914 umfasst ein Ausgleichsmassenelement 916, eine Federeinheit 918, die der bereits beschriebenen Federeinheit 18 entspricht, und ein Gehäuseelement 926. Das Gehäuseelement 926 ist dazu vorgesehen, das Ausgleichsmassenelement 916 und die Federeinheit 918 zumindest teilweise aufzunehmen. Das Gehäuseelement 926 ist ringförmig ausgebildet und weist einen L-förmigen Querschnitt auf.

Ein kurzer Schenkel 974 des Gehäuseelements 926 erstreckt sich in einem montierten Zustand senkrecht zur Axialrichtung 24 der Ausgleichseinheit 914 und liegt in Radialrichtung 30 an einem nicht dargestellten Führungsrohr der Schlagwerkeinheit 10 an. Ein langer Schenkel 976 des Gehäuseelements 926 erstreckt sich in einem montierten Zustand parallel zur Axialrichtung 24 der Ausgleichseinheit 914 und liegt in Axialrichtung 24 an einem nicht dargestellten weiteren Führungsrohr an. Der lange Schenkel 976 des Gehäuseelements 926 ist in Radialrichtung 30 beabstandet zu dem nicht dargestellten Führungsrohr angeordnet.

Das Gehäuseelement 926 weist Federanschlagselemente 966 auf, die sich parallel zur Axialrichtung 24 erstrecken. Das Gehäuseelement 926 weist weitere Federanschlagselemente 966 auf, die in Radialrichtung 30 nach innen versetzt sind. Die Federanschlagselemente 966 erstrecken sich parallel zur Axialrichtung 24. Das Ausgleichsmassenelement 916 weist an einem Außenumfang Nuten 978 auf, die sich parallel zur Axialrichtung 24 erstrecken. Zu einer Montage der Ausgleichseinheit 914 wird das Ausgleichsmassenelement 916 in Axialrichtung 24 in das Gehäuseelement 926 eingeschoben. Dabei umgreifen die Nuten 978 des Ausgleichsmassenelements 916 die Federanschlagselemente 966. Ist das Ausgleichsmassenelement 916 vollständig in das Gehäuseelement 926 eingeschoben, wird das Ausgleichsmassenelement 916 so verdreht, dass die Federanschlagselemente 966 des Gehäuseelements 926 und Federaufnahmeelemente 928 des Ausgleichsmassenelements 916 in Axialrichtung 24 auf einer Linie liegen. In dieser Position können anschließend die Federelemente 920, 922 der Federeinheit 918 in Axialrichtung 24 zwischen den Federaufnahmeelementen 928 und den Federanschlagselementen 962, 966 montiert werden.

## Patentansprüche

1. Handwerkzeugmaschinenvorrichtung mit zumindest einer Schlagwerkeinheit (10), die zumindest ein Führungsrohr (12, 112, 212, 312, 412, 512, 612, 712, 812) umfasst, und mit zumindest einer Ausgleichseinheit (14, 114, 214, 314, 414, 514, 614, 714, 814, 914), die zu einer Reduzierung von Vibrationen in zumindest einem Betriebszustand der Schlagwerkeinheit (10) vorgesehen ist, die zumindest teilweise radial außerhalb des Führungsrohrs (12, 112, 212, 312, 412, 512, 612, 712, 812) angeordnet ist und die zumindest ein Ausgleichsmassenelement (16, 116, 216, 316, 416, 516, 616, 716, 816, 916) und zumindest eine Federeinheit (18, 118, 218, 318, 418, 518, 618, 718, 818, 918) aufweist, wobei die Federeinheit (18, 118, 218, 318, 418, 518, 618, 718, 818, 918) zumindest zwei Federelemente (20, 120, 220, 320, 420, 520, 620, 720, 820, 920) aufweist, die dazu vorgesehen sind, in zumindest einem Betriebszustand der Ausgleichseinheit (14, 114, 214, 314, 414, 514, 614, 714, 814, 914) zumindest im Wesentlichen gleichgerichtet auf das Ausgleichsmassenelement (16, 116, 216, 316, 416, 516, 616, 716, 816, 916) zu wirken, **dadurch gekennzeichnet, dass** das Ausgleichsmassenelement (16, 116, 216, 316, 416, 516, 616, 716, 816, 916) hohlzylinderförmig ausgebildet ist, **wobei** die Federelemente (20, 120, 220, 320, 420, 520, 620, 720, 820, 920) im Wesentlichen gleichmäßig über einen Umfang des Ausgleichsmassenelements (16, 116, 216, 316, 416, 516, 616, 716, 816, 916) verteilt angeordnet sind.

2. Handwerkzeugmaschinenvorrichtung nach Anspruch 1, **dadurch gekennzeichnet, dass** die Federeinheit (18, 118, 218, 318, 418, 518, 618, 718, 818, 918) zumindest drei Federelemente (20, 120, 220, 320, 420, 520, 620, 720, 820, 920) aufweist, die dazu vorgesehen sind, in zumindest einem Betriebszustand gleichgerichtet auf das Ausgleichsmassenelement (16, 116, 216, 316, 416, 516, 616, 716, 816, 916) zu wirken.

3. Handwerkzeugmaschinenvorrichtung nach einem der vorhergehenden Ansprüche, **dadurch gekennzeichnet, dass** die Federeinheit (18, 118, 218, 318, 418, 518, 618, 718, 818, 918) zumindest zwei weitere Federelemente (22, 122, 222, 322, 422, 522, 622, 722, 822, 922) aufweist, die dazu vorgesehen sind, in zumindest einem Betriebszustand zueinander gleichgerichtet und den Federelementen (20, 120, 220, 320, 420, 520, 620, 720, 820, 920) entgegengerichtet auf das Ausgleichsmassenelement (16, 116, 216, 316, 416, 516, 616, 716, 816, 916) zu wirken.

4. Handwerkzeugmaschinenvorrichtung nach Anspruch 3, **dadurch gekennzeichnet, dass** die Federelemente (20, 120, 220, 320, 420, 520, 620, 720, 820, 920) und die weiteren Federelemente (22, 122, 222, 322, 422, 522, 622, 722, 822, 922) der Federeinheit (18, 118, 218, 318, 418, 518, 618, 718, 818, 918) in einer Axialrichtung (24) an sich gegenüberliegenden Enden des Ausgleichsmassenelements (16, 116, 216, 316, 416, 516, 616, 716, 816, 916) angeordnet sind.

5. Handwerkzeugmaschinenvorrichtung zumindest nach Anspruch 3, **dadurch gekennzeichnet, dass** die weiteren Federelemente (22, 122, 222, 322, 422, 522, 622, 722, 822, 922) zumindest im Wesentlichen gleichmäßig über einen Umfang des Ausgleichsmassenelements (16, 116, 216, 316, 416, 516, 616, 716, 816, 916) verteilt angeordnet sind.

6. Handwerkzeugmaschinenvorrichtung nach einem der vorhergehenden Ansprüche, **dadurch gekennzeichnet, dass** die Ausgleichseinheit (514, 614, 714, 814, 914) zumindest ein Gehäuseelement (526, 626, 726, 826, 826', 926) umfasst, das dazu vorgesehen ist, zumindest das zumindest eine Ausgleichsmassenelement (516, 616, 716, 816, 916) und/oder die Federeinheit (518, 618, 718, 818, 918) zumindest teilweise aufzunehmen.

7. Handwerkzeugmaschinenvorrichtung nach Anspruch 6, **dadurch gekennzeichnet, dass** das zumindest eine Gehäuseelement (526, 626, 726, 826, 826', 926) zumindest teilweise radial außerhalb der Schlagwerkeinheit (10) angeordnet ist.

8. Handwerkzeugmaschinenvorrichtung nach einem der vorhergehenden Ansprüche, **dadurch gekennzeichnet, dass** das zumindest eine Ausgleichsmassenelement (16, 116, 216, 316, 416, 516, 616, 716, 816, 916) zumindest ein Federaufnahmeelement (28, 128, 928) umfasst, das zu einer Befestigung zumindest eines der Federelemente (20, 120, 220, 320, 420, 520, 620, 720, 820, 920, 22, 122, 222, 322, 422, 522, 622, 722, 822, 922) der Federeinheit (18, 118, 218, 318, 418, 518, 618, 718, 818, 918) in eine Radialrichtung (30) und/oder in eine Umfangsrichtung (32) des Ausgleichsmassenelements (16, 116, 216, 316, 416, 516, 616, 716, 816, 916) vorgesehen ist.

9. Handwerkzeugmaschinenvorrichtung nach Anspruch 8, **dadurch gekennzeichnet, dass** das zumindest eine Federaufnahmeelement (28, 128, 928) zumindest teilweise einstückig mit dem Ausgleichsmassenelement (16, 116, 216, 316, 416, 516, 616, 716, 816, 916) verbunden ist.

10. Handwerkzeugmaschine mit einer Handwerkzeugmaschinenvorrichtung nach einem der Ansprüche 1 bis 9.

## Claims

1. Hand-held machine tool device having at least one percussion mechanism unit (10) which comprises at least one guide tube (12, 112, 212, 312, 412, 512, 612, 712, 812), and having at least one compensation unit (14, 114, 214, 314, 414, 514, 614, 714, 814, 914) which, in at least one operating state of the percussion mechanism unit (10), is provided for reducing vibrations and which is at least in part disposed radially outside the guide tube (12, 112, 212, 312, 412, 512, 612, 712, 812) and which has at least one compensation mass element (16, 116, 216, 316, 416, 516, 616, 716, 816, 916) and at least one spring unit (18, 118, 218, 318, 418, 518, 618, 718, 818, 918), wherein the spring unit (18, 118, 218, 318, 418, 518, 618, 718, 818, 918) has at least two spring elements (20, 120, 220, 320, 420, 520, 620, 720, 820, 920) which, in at least one operating state of the compensation unit (14, 114, 214, 314, 414, 514, 614, 714, 814, 914), are provided to act in an at least substantially identically directed manner on the compensation mass element (16, 116, 216, 316, 416, 516, 616, 716, 816, 916), **characterized in that** the compensation mass element (16, 116, 216, 316, 416, 516, 616, 716, 816, 916) is configured so as to be hollow-cylindrical, **wherein** the spring elements (20, 120, 220, 320, 420, 520, 620, 720, 820, 920) are disposed so as to be substantially uniformly distributed across a circumference of the compensation mass element (16, 116, 216, 316, 416, 516, 616, 716, 816, 916).

2. Hand-held machine tool device according to Claim 1, **characterized in that** the spring unit (18, 118, 218, 318, 418, 518, 618, 718, 818, 918) has at least three spring elements (20, 120, 220, 320, 420, 520, 620, 720, 820, 920) which, in at least one operating state, are provided to act in an identically directed manner on the compensation mass element (16, 116, 216, 316, 416, 516, 616, 716, 816, 916).

3. Hand-held machine tool device according to one of the preceding claims, **characterized in that** the spring unit (18, 118, 218, 318, 418, 518, 618, 718, 818, 918) has at least two further spring elements (22, 122, 222, 322, 422, 522, 622, 722, 822, 922) which, in at least one operating state, are provided to act in a mutually identically directed manner and a manner directed counter to the spring elements (20, 120, 220, 320, 420, 520, 620, 720, 820, 920) on the compensation element (16, 116, 216, 316, 416, 516, 716, 816, 916).

4. Hand-held machine tool device according to Claim 3, **characterized in that** the spring elements (20, 120, 220, 320, 420, 520, 620, 720, 820, 920) and the further spring elements (22, 122, 222, 322, 422, 522, 622, 722, 822, 922) of the spring unit (18, 118, 218, 318, 418, 518, 618, 718, 818, 918) are disposed on ends of the compensation mass element (16, 116, 216, 316, 416, 516, 616, 716, 816, 916) that are mutually opposite in an axial direction (24) .

5. Hand-held machine tool device according to at least Claim 3, **characterized in that** the further spring elements (22, 122, 222, 322, 422, 522, 622, 722, 822, 922) are disposed so as to be at least substantially uniformly distributed across a circumference of the compensation mass element (16, 116, 216, 316, 416, 516, 616, 716, 816, 916).

6. Hand-held machine tool device according to one of the preceding claims, **characterized in that** the compensation unit (514, 614, 714, 814, 914) comprises at least one housing element (526, 626, 726, 826, 826', 926) which is provided for at least receiving at least in part the at least one compensation mass element (516, 616, 716, 816, 916) and/or the spring unit (518, 618, 718, 818, 918).

7. Hand-held machine tool device according to Claim 6, **characterized in that** the at least one housing element (526, 626, 726, 826, 826', 926) is at least in part disposed radially outside the percussion mechanism unit (10).

8. Hand-held machine tool device according to one of the preceding claims, **characterized in that** the at least one compensation mass element (16, 116, 216, 316, 416, 516, 616, 716, 816, 916) comprises at least one spring receptacle element (28, 128, 928) which is provided for fastening at least one of the spring elements (20, 120, 220, 320, 420, 520, 620, 720, 820, 920, 22, 122, 222, 322, 422, 522, 622, 722, 822, 922) of the spring unit (18, 118, 218, 318, 418, 518, 618, 718, 818, 918) in a radial direction (30) and/or in a circumferential direction (32) of the compensation mass element (16, 116, 216, 316, 416, 516, 616, 716, 816, 916).

9. Hand-held machine tool device according to Claim 8, **characterized in that** the at least one spring receptacle element (28, 128, 928) is at least in part integrally connected to the compensation mass element (16, 116, 216, 316, 416, 516, 716, 816, 916) .

10. Hand-held machine tool having a hand-held machine tool device according to one of Claims 1 to 9.

## Revendications

1. Dispositif de machine-outil manuelle comprenant au moins une unité de mécanisme de percussion (10) qui comprend au moins un tube de guidage (12, 112, 212, 312, 412, 512, 612, 712, 812), et comprenant au moins une unité d'équilibrage (14, 114, 214, 314, 414, 514, 614, 714, 814, 914) qui est prévue pour réduire les vibrations dans au moins un état de fonctionnement de l'unité de mécanisme de percussion (10), qui est disposée au moins en partie radialement à l'extérieur du tube de guidage (12, 112, 212, 312, 412, 512, 612, 712, 812) et qui présente au moins un élément de masse d'équilibrage (16, 116, 216, 316, 416, 516, 616, 716, 816, 916) et au moins une unité de ressort (18, 118, 218, 318, 418, 518, 618, 718, 818, 918), l'unité de ressort (18, 118, 218, 318, 418, 518, 618, 718, 818, 918) présentant au moins deux éléments de ressort (20, 120, 220, 320, 420, 520, 620, 720, 820, 920) qui sont prévus pour agir, dans au moins un état de fonctionnement de l'unité d'équilibrage (14, 114, 214, 314, 414, 514, 614, 714, 814, 914), au moins essentiellement dans le même sens sur l'élément de masse d'équilibrage (16, 116, 216, 316, 416, 516, 616, 716, 816, 916), **caractérisé en ce que** l'élément de masse d'équilibrage (16, 116, 216, 316, 416, 516, 616, 716, 816, 916) est réalisé sous forme cylindrique creuse, les éléments de ressort (20, 120, 220, 320, 420, 520, 620, 720, 820, 920) étant répartis de manière essentiellement uniforme sur une périphérie de l'élément de masse d'équilibrage (16, 116, 216, 316, 416, 516, 616, 716, 816, 916).

2. Dispositif de machine-outil manuelle selon la revendication 1, **caractérisé en ce que** l'unité de ressort (18, 118, 218, 318, 418, 518, 618, 718, 818, 918) présente au moins trois éléments de ressort (20, 120, 220, 320, 420, 520, 620, 720, 820, 920) qui sont prévus pour agir, dans au moins un état de fonctionnement, dans le même sens sur l'élément de masse d'équilibrage (16, 116, 216, 316, 416, 516, 616, 716, 816, 916).

3. Dispositif de machine-outil manuelle selon l'une quelconque des revendications précédentes, **caractérisé en ce que** l'unité de ressort (18, 118, 218, 318, 418, 518, 618, 718, 818, 918) présente au moins deux éléments de ressort supplémentaires (22, 122, 222, 322, 422, 522, 622, 722, 822, 922) qui sont prévus pour agir, dans au moins un état de fonctionnement, dans le même sens l'un par rapport à l'autre et dans le sens opposé aux éléments de ressort (20, 120, 220, 320, 420, 520, 620, 720, 820, 920) sur l'élément de masse d'équilibrage (16, 116, 216, 316, 416, 516, 616, 716, 816, 916).

4. Dispositif de machine-outil manuelle selon la revendication 3, **caractérisé en ce que** les éléments de ressort (20, 120, 220, 320, 420, 520, 620, 720, 820, 920) et les éléments de ressort supplémentaires (22, 122, 222, 322, 422, 522, 622, 722, 822, 922) de l'unité de ressort (18, 118, 218, 318, 418, 518, 618, 718, 818, 918) sont disposés dans une direction axiale (24) au niveau d'extrémités opposées de l'élément de masse d'équilibrage (16, 116, 216, 316, 416, 516, 616, 716, 816, 916).

5. Dispositif de machine-outil manuelle selon au moins la revendication 3, **caractérisé en ce que** les éléments de ressort supplémentaires (22, 122, 222, 322, 422, 522, 622, 722, 822, 922) sont répartis au moins essentiellement uniformément sur une périphérie de l'élément de masse d'équilibrage (16, 116, 216, 316, 416, 516, 616, 716, 816, 916) .

6. Dispositif de machine-outil manuelle selon l'une quelconque des revendications précédentes, **caractérisé en ce que** l'unité d'équilibrage (514, 614, 714, 814, 914) comprend au moins un élément de boîtier (526, 626, 726, 826, 826', 926) qui est prévu pour recevoir au moins en partie au moins l'au moins un élément de masse d'équilibrage (516, 616, 716, 816, 916) et/ou l'unité de ressort (518, 618, 718, 818, 918).

7. Dispositif de machine-outil manuelle selon la revendication 6, **caractérisé en ce que** l'au moins un élément de boîtier (526, 626, 726, 826, 826', 926) est disposé au moins en partie radialement à l'extérieur de l'unité de mécanisme de percussion (10) .

8. Dispositif de machine-outil manuelle selon l'une quelconque des revendications précédentes, **caractérisé en ce que** l'au moins un élément de masse d'équilibrage (16, 116, 216, 316, 416, 516, 616, 716, 816, 916) comprend au moins un élément de réception de ressort (28, 128, 928) qui est prévu pour une fixation d'au moins l'un des éléments de ressort (20, 120, 220, 320, 420, 520, 620, 720, 820, 920, 22, 122, 222, 322, 422, 522, 622, 722, 822, 922) de l'unité de ressort (18, 118, 218, 318, 418, 518, 618, 718, 818, 918) dans une direction radiale (30) et/ou dans une direction périphérique (32) de l'élément de masse d'équilibrage (16, 116, 216, 316, 416, 516, 616, 716, 816, 916).

9. Dispositif de machine-outil manuelle selon la revendication 8, **caractérisé en ce que** l'au moins un élément de réception de ressort (28, 128, 928) est connecté au moins en partie d'une seule pièce à l'élément de masse d'équilibrage (16, 116, 216, 316, 416, 516, 616, 716, 816, 916).

10. Machine-outil manuelle comprenant un dispositif de machine-outil manuelle selon l'une quelconque des revendications 1 à 9.
